Europäisches Patentamt

European Patent Office

Office européen des brevets

(11) Numéro de publication: **0 408 439 A1**

# DEMANDE DE BREVET EUROPEEN

(21) Numéro de dépôt: 90401978.3

(22) Date de dépôt: 09.07.90

(51) Int. Cl.⁵: **G06F 1/02**

(30) Priorité: 10.07.89 FR 8909256

(43) Date de publication de la demande:
16.01.91 Bulletin 91/03

(84) Etats contractants désignés:
**DE FR GB IT NL**

(71) Demandeur: **COMMISSARIAT A L'ENERGIE
ATOMIQUE Etablissement de Caractère
Scientifique Technique et Industriel
31/33, rue de la Fédération
F-75015 Paris(FR)**

(72) Inventeur: **Lebel, Philippe
5 rue des Longaines
F-91620 La Ville au Bois(FR)**

(74) Mandataire: **Mongrédien, André et al
c/o BREVATOME 25, rue de Ponthieu
F-75008 Paris(FR)**

(54) **Générateur de signaux à états logiques programmables.**

(57) L'invention concerne un générateur de signaux à états logiques programmables, comportant plusieurs voies (V0, V1, V2, ... , V4, ... ) capables de fournir respectivement sur des sorties, des signaux cycliques (... , SCV1, SCV2, SCV3, ... ) à états logiques successifs programmables, à deux états.

Ce générateur comporte, pour chaque voie, en générateur (G1) fournissant des impulsions de fréquence prédéterminée, une mémoire programmable (M1) d'états de cycle enregistrant les états binaires du cycle à obtenir, un compteur d'adresses (C1) de la mémoire d'états (M1), et des moyens (MC1) de commande de déclenchement ou d'arrêt de la voie, reliés au générateur G1 d'impulsions pour commander son déclenchement ou son arrêt.

Application à l'obtention de signaux cycliques complexes et au déclenchement de processus divers.

FIG. 1

EP 0 408 439 A1

## GENERATEUR DE SIGNAUX A ETATS LOGIQUES PROGRAMMABLES

La présente invention concerne un générateur de signaux à états logiques programmables.

Elle s'applique notamment à l'obtention de signaux logiques cycliques complexes, destinés par exemple, à la synchronisation de chaînes de mesure, au déclenchement de processus divers, à la simulation d'évènements, aux tests de circuits, ... , etc.

Les signaux à états logiques programmables sont fournis respectivement, sur des sorties de différentes voies indépendantes du générateur. Chaque sortie fournit une succession d'impulsions de durées et d'écarts programmables ; un ou plusieurs cycles d'impulsions peuvent être fournis sur chaque sortie. Le déclenchement de la génération d'impulsions par chaque voie du générateur, peut être provoqué, soit par des commandes extérieures, soit par l'action d'un signal de sortie d'une autre voie de ce générateur, à un instant prédéterminé.

On ne connaît pas actuellement de générateur de signaux logiques capable d'offrir des possibilités de programmation indiquées plus haut.

On connaît actuellement des appareils générateurs de fonctions aléatoires, qui peuvent fournir des impulsions de durées et d'écarts variables, mais sur une, ou un nombre limité de voies et sans possibilité d'interconnexion entre elles. C'est le cas par exemple du générateur décrit dans le brevet US-A-4 791 384. On connaît par ailleurs, des générateurs de mots binaires débitant en parallèle des séquences programmées, la programmation de chacune de ces voies ne pouvant être que simultanée et les séquences étant cadencées par une fréquence commune. C'est le cas par exemple du générateur décrit dans le brevet EP-A-0 137 304.

L'invention a précisément pour but de remédier à ces inconvénients, grâce à un générateur de signaux à états logiques programmables comportant plusieurs voies capables de fournir respectivement sur des sorties, des signaux cycliques à états logiques successifs programmables, à deux états, ces voies étant interconnectables, de manière à obtenir des signaux présentant des états logiques adaptés à n'importe quel type d'application.

L'invention a pour objet un générateur de signaux à états logiques programmables, comportant plusieurs voies capables de fournir respectivement sur des sorties, des signaux cycliques à états logiques successifs programmables, à deux états, caractérisé par le fait que chaque voie comporte :

- un générateur d'impulsions fournissant sur une sortie, des impulsions ayant une fréquence prédéterminée programmable à partir d'impulsions ayant une fréquence de référence et qui sont reçues par une entrée du générateur d'impulsions ;

- une mémoire d'états de cycle, programmable, ayant des entrées d'écriture d'informations d'états, pour enregistrer à des adresses successives, pour au moins un cycle, des informations successives d'états binaires, correspondant respectivement aux états logiques successifs du signal fourni par la voie pour ce cycle, et pour enregistrer à des adresses appropriées, des informations de fin de cycle, de dernier pas du cycle et de marquage de rang d'un pas du cycle ;

- un compteur d'adresses d'états du cycle, relié par une entrée à la sortie du générateur d'impulsions, et relié par des sorties à des entrées d'adressage de la mémoire d'états, pour commander la lecture, à la fréquence prédéterminée, des informations binaires successives d'états enregistrées, les signaux logiques correspondant à ce cycle étant fournis sur une sortie principale de la mémoire d'états, la fréquence prédéterminée fixant le pas ou durée de chaque état logique du cycle, chaque cycle comportant un nombre prédéterminé de pas successifs repérés respectivement par des rangs comptés entre un premier et un dernier pas, ces pas successifs correspondant respectivement aux états logiques successifs et aux adresses successives de la mémoire d'états ;

- des moyens de commande de déclenchement ou d'arrêt de la voie considérée, ces moyens de commande ayant des entrées de commande pour recevoir respectivement des signaux de commande de déclenchement ou d'arrêt, et une sortie reliée à une entrée de commande du générateur d'impulsions, pour lui fournir un signal de commande de déclenchement ou d'arrêt.

Selon une autre caractéristique de l'invention, l'information dite de fin de cycle est enregistrée dans la mémoire d'états, à une adresse correspondant à celle du dernier pas du cycle, une sortie de cette mémoire d'états, dite de fin de cycle, fournissant à la lecture de cette dernière adresse, un signal de commande de remise à zéro du compteur d'adresses d'états, cette sortie de fin de cycle étant reliée à une entrée de commande du compteur d'états, pour commander la remise à zéro de ce compteur et le redémarrage du cycle au premier pas de ce cycle.

Selon une autre caractéristique, l'information dite de dernier pas du cycle est enregistrée dans la mémoire d'états à une adresse correspondant à celle de l'avant dernier pas du cycle, une sortie de dernier

EP 0 408 439 A1

pas de la mémoire d'états fournissant, à la lecture de cette information de dernier pas, un signal logique correspondant au dernier pas du cycle, la voie considérée comportant en outre :
- une mémoire de nombre de cycles dans laquelle est enregistrée, à une adresse déterminée, une information de comptage d'au moins un nombre prédéterminé de cycles de signaux logiques fournis par la mémoire d'états ;
- un compteur d'adresses de la mémoire de nombre de cycles, ce compteur ayant une entrée reliée à la sortie de dernier pas de la mémoire d'états, des sorties de ce compteur d'adresses de nombre de cycles étant reliées à des entrées d'adressage de la mémoire de nombre de cycles, cette mémoire de nombre fournissant sur une sortie de commande, reliée à une entrée de commande d'arrêt des moyens de déclenchement, un signal de commande d'arrêt, transmis au générateur d'impulsions par la sortie des moyens de commande, lorsque ladite information de comptage a été adressée par le compteur d'adresses de nombre de cycles.

Selon une autre caractéristique, l'information dite de marquage du rang d'au moins un pas du cycle est enregistrée dans la mémoire d'états, à une adresse correspondant à ce rang, la mémoire d'états comportant en outre, une sortie dite de marquage d'un pas du cycle, reliée à une entrée de commande de déclenchement des moyens de commande d'au moins une autre voie du générateur de signaux logiques, pour lui appliquer un signal de commande de déclenchement du générateur d'impulsions de cette autre voie, pour que la mémoire d'états de cette autre voie fournisse sur sa sortie principale, le signal logique correspondant aux informations successives binaires d'états enregistrées dans la mémoire d'états de cette autre voie.

Selon une autre caractéristique, le générateur comporte pour chaque voie, des moyens de sélection de mode de fonctionnement de la voie, ayant des sorties reliées à des entrées de sélection des moyens de commande de la voie, pour fournir à ces entrées, des signaux de sélection de mode de fonctionnement.

Selon une autre caractéristique, les impulsions présentant ladite fréquence de référence sont fournies par une horloge pilote du générateur de signaux logiques, ou par une horloge externe à ce générateur.

Les caractéristiques et avantages de l'invention ressortiront mieux de la description qui va suivre, donnée en référence aux dessins annexés, dans lesquels :

La figure 1 représente schématiquement un générateur de signaux à états logiques programmables, conforme à l'invention.

La figure 2 représente un diagramme schématique de signaux à états logiques programmables fournis par une sortie du générateur de l'invention.

La figure 3 représente des diagrammes schématiques de signaux à états logiques programmables, fournis par différentes sorties du générateur de l'invention.

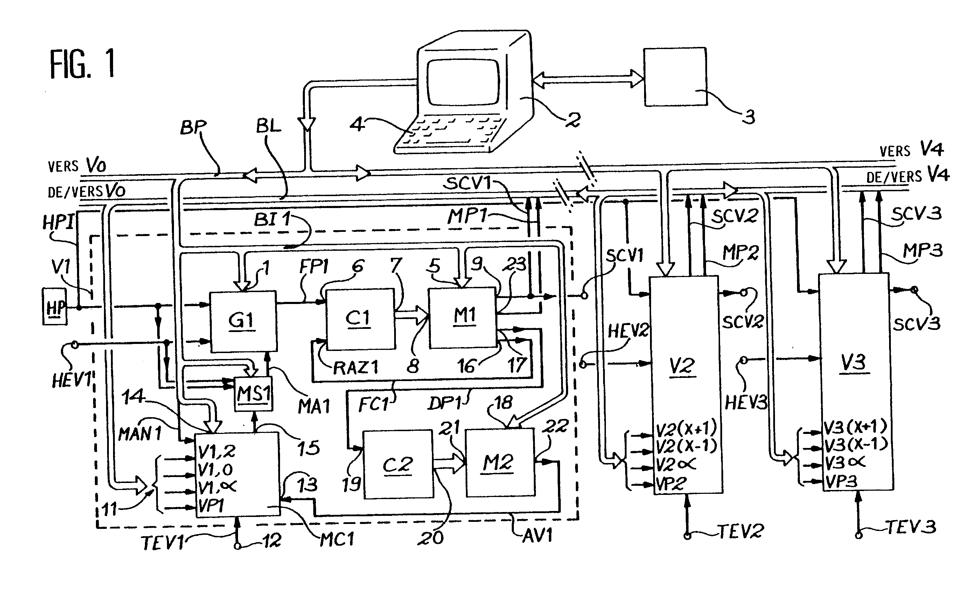

Le générateur de signaux à états logiques programmables, représenté schématiquement sur la figure 1, comporte plusieurs voies V0, V1, V2, V3, V4. Seule la voie V1 est représentée de manière détaillée, les voies V2 et V3 sont représentées très schématiquement, et les voies V0 et V4 sont simplement mentionnées. Les voies telles que V1, V2, V3, sont capables de fournir respectivement sur des sorties, des signaux cycliques SCV1, SCV2, SCV3, à états logiques successifs programmables à deux états, qui seront décrits plus loin en détail.

Dans l'exemple de réalisation du générateur de l'invention, représenté sur cette figure, le nombre de voies a été limité à cinq, mais il est bien évident que ce nombre peut être plus ou moins important.

Seule l'une des voies (V1) est représentée de manière plus détaillée sur la figure, mais toutes les autres voies présentent une structure identique à celle de la voie V1.

La voie V1 comporte un générateur d'impulsions G1, qui fournit sur une sortie des impulsions FP1, qui seront décrites plus loin en détail. Ces impulsions ont une fréquence prédéterminée programmable et sont obtenues, soit à partir d'impulsions HPI fournies par une horloge pilote HP commune à toutes les voies, soit à partir d'impulsions HEV1 fournies par des moyens externes au générateur de l'invention ; la fréquence des impulsions HPI ou HEV1 est prise comme fréquence de référence. Le générateur G1 est un diviseur de fréquence programmable ; il comporte des entrées de commande 1 recevant des signaux de commande permettant de fixer la fréquence prédéterminée des impulsions FP1, à partir de la fréquence des impulsions HPI ou HEV1.

Ces signaux de commande peuvent être fournis par un processeur 2 relié à une mémoire 3 et à un clavier de commande 4.

Chaque voie, telle que la voie V1, comporte aussi une mémoire M1, qualifiée de mémoire d'états de cycle, programmable à partir de données et d'informations d'états reçues sur des entrées d'écritures 5 reliées au processeur 2. Elle permet d'enregistrer, à des adresses successives, pour au moins un cycle du signal logique que doit fournir la voie V1, des informations binaires successives d'états ; ces informations correspondent respectivement aux états logiques successifs du signal SCV1 fourni par la voie V1 pour ce

3

cycle.

Chaque voie, telle que la voie V1, comporte aussi un compteur C1 d'adresses d'états du cycle SCV1 fourni par cette voie. Ce compteur est relié par une entrée 6, à la sortie du générateur d'impulsions G1, pour recevoir les impulsions FP1 de fréquence prédéterminée. Ce compteur est aussi relié par des sorties 7, à des entrées d'adressage 8 de la mémoire d'états M1 ; ce compteur commande la lecture, à la fréquence prédéterminée FP1, des informations binaires successives d'états enregistrées dans la mémoire M1. Le signal logique SCV1 correspondant à ce cycle, est fourni sur une sortie 9 de la mémoire d'états M1.

Comme on le verra plus loin en détail, la fréquence prédéterminée des impulsions FP1 fournies par le générateur G1, permet de fixer le "pas" ou durée de chaque état logique du cycle du signal SCV1. Chaque cycle comporte un nombre prédéterminé de pas successifs. Ces pas sont repérés respectivement par des rangs qui sont comptés entre un premier et un dernier pas. Les pas successifs correspondent respectivement aux états logiques successifs du signal SCV1, et aux adresses successives de la mémoire d'état.

Enfin, chaque voie, telle que V1, comporte des moyens de commande MC1 et un module de synchronisation MS1 recevant les signaux issus de l'horloge pilote HP et les impulsions HEV1 fournies par les moyens externes, qui permettent de synchroniser sur la fréquence de référence, l'impulsion de commande issue des moyens de commande MC1.

Les moyens de commande MC1 comportent des entrées de commande 11, 12, 13, qui peuvent recevoir, comme on le verra plus loin en détail, des signaux de commande de déclenchement ou d'arrêt ; la prise en compte de ces signaux dépend notamment d'ordres reçus sur des entrées 14 de ces moyens de commande et provenant du processeur 2. Les moyens de commande MC1 comportent également une sortie 15, reliée à une entrée de commande du module de synchronisation MS1 qui, lui-même, fournit au générateur G1 un signal de commande MA1, de déclenchement ou d'arrêt, permettant ainsi à la fréquence FP1 d'être déclenchée, par exemple, sur le premier front montant de l'horloge HP, survenant après le signal MA1. De cette manière, on peut synchroniser les états logiques successifs d'un signal SCV1 avec les états des signaux SCVi des autres voies, sur une période inférieure à celle des impulsions de l'horloge HP. Le décalage de phase de synchronisation est par exemple de 50 nanosecondes avec une horloge HP délivrant des impulsions de 50 MHz.

Une information, dite de fin de cycle, est enregistrée par le processeur 2, via les entrées d'écriture 5, dans la mémoire d'états M1, à une adresse correspondant à celle du dernier pas du cycle du signal logique SCV1. Une sortie 16, "dite de fin de cycle", de cette mémoire d'états, fournit à la lecture de cette dernière adresse, un signal FC1 de commande de remise à zéro du compteur d'adresses d'états C1. A cet effet, la sortie 16 de fin de cycle, est reliée à une entrée RAZ1 de remise à zéro du compteur C1.

Une information, dite de "dernier pas du cycle", est aussi enregistrée par le processeur 2, via les entrées d'écriture 5, dans la mémoire d'états M1, à une adresse correspondante à celle de l'avant dernier pas de ce cycle. Une sortie 17 de la mémoire d'états M1, dite "de dernier pas', fournit à la lecture de cette information de dernier pas, un signal logique DP1, correspondant au dernier pas du cycle. Cette information permet, comme on le verra plus loin en détail, de contrôler le nombre de cycles identiques au cycle écoulé, constituant le signal logique SEV1 désiré.

A cet effet, le générateur de l'invention comporte une mémoire M2, dite "mémoire de nombre de cycles", dans laquelle sont enregistrées, à des adresses successives, des informations binaires successives dont l'une, distincte de toutes les autres, est enregistrée à une adresse précise qui définit le comptage d'au moins un nombre prédéterminé de cycles du signal logique SCV1 que l'on souhaite obtenir à la sortie 9 de la mémoire d'états M1. Les informations concernant le nombre de cycles, enregistrées dans la mémoire M2, sont appliquées à des entrées d'écritures 18 de la mémoire M2, par des sorties du processeur 2.

Le générateur comporte aussi un compteur d'adresses C2 de la mémoire de nombre de cycles M2. Ce compteur qui peut être qualifié de "compteur de nombre de cycles", comporte une entrée 19 reliée à la sortie 17 de dernier pas de la mémoire d'états M1, pour recevoir le signal DP1 de dernier pas de chaque cycle SCV1, fourni par la sortie 17 de la mémoire M1. Des sorties 20 du compteur C2 de nombre de cycles, sont reliées à des entrées d'adressage 21 de la mémoire M2 de nombre de cycles. Cette mémoire fournit sur une sortie de commande 22, reliée à l'entrée de commande 13 des moyens de commande MC1, un signal AV1 de commande d'arrêt du fonctionnement de la voie V1, lorsque le nombre prédéterminé de cycles du signal logique SCV1, a été obtenu à la sortie 9 de la mémoire d'états M1. Le signal de commande d'arrêt AV1 provoque l'apparition d'un signal MA1 sur la sortie 15 des moyens de commande MC1. Ce signal MA1 commande l'arrêt du générateur d'impulsions G1. Cet arrêt est provoqué lorsque toute l'information de comptage de nombre de cycles, enregistrée dans la mémoire M2, a été adressée par le compteur de nombre de cycles C2.

Enfin, une information, dite de "marquage d'un rang d'un pas du cycle", est enregistrée par le processeur 2, via les entrées d'écriture 5 dans la mémoire d'états M1. Cette information est enregistrée dans cette mémoire à une adresse qui correspond à ce rang. La mémoire d'états M1 comporte une sortie 23, dite de "marquage d'un pas du cycle". Cette sortie 23 est reliée à une entrée de commande de déclenchement des moyens de commande d'au moins une autre voie du générateur (V2 ou V3 dans l'exemple représenté), pour lui appliquer un signal de commande MP1 de déclenchement du générateur d'impulsions de cette autre voie. La mémoire d'états de cette autre voie, fournit alors sur sa sortie principale, les signaux logiques SCV2 ou SCV3 correspondant aux informations successives binaires d'états, enregistrées dans la mémoire d'états de cette autre voie. La sortie 23 de marquage de pas de la mémoire M1, qui fournit le signal MP1, est reliée, grâce à un bus local BL, par exemple à une entrée VP2 de commande de déclenchement des moyens de commande de déclenchement de la voie V2, non représentée sur cette figure, ou à une entrée VP3 de commande de déclenchement des moyens de commande de la voie V3, non représentés sur cette figure. De la même manière, les moyens de commande de déclenchement MC1 de la voie V1 comportent une entrée VP1 qui peut recevoir par le bus local BL, au moins l'un des signaux de marquage de pas MP2 ou MP3 des voies V2 ou V3, ou l'un des signaux de marquage de pas de voies V0 et V4.

Sur cette figure, HEV2 et HEV3 désignent respectivement des signaux d'horloge provenant de moyens externes au générateur ; ces signaux d'horloge peuvent être fournis respectivement aux générateurs d'impulsions des voies V2 et V3, si l'on ne souhaite pas utiliser l'horloge pilote HP commune à ces voies. SCV2 et SCV3 désignent respectivement les signaux logiques de sortie des voies V2 et V3.

Le bus local BL, ainsi que des interfaces non représentées sur cette figure, permettent de réaliser les interconnexions que l'on souhaite effectuer entre les sorties de certaines voies et les entrées de déclenchement d'autres voies. Chaque voie comporte un bus interne, tel que BI1, relié à un bus principal BP, grâce auquel le processeur 2 transmet à chaque voie des informations et données nécessaires à leur programmation.

Comme indiqué plus haut, chaque voie peut être déclenchée manuellement, grâce à un signal, tel que MAN1, appliqué aux moyens de commande MC1 et provenant de la sélection d'une touche appropriée du clavier 4 du processeur 2.

Outre l'entrée de commande de déclenchement manuelle recevant le signal MAN1, et l'entrée VP1 recevant un signal de commande de déclenchement provenant d'une autre voie, à partir d'un rang prédéterminé d'un pas d'un cycle de signaux fournis par cette autre voie, les moyens de commande, tels que MC1 de chaque voie, comportent aussi une entrée 12 dite de trigger externe ; cette entrée peut recevoir un signal TEV1 permettant de déclencher la voie V1 à partir d'une impulsion de commande fournie par des moyens externes, soit sur un front montant, soit sur un front descendant, de cette impulsion. Les entrées de trigger externe, qui peuvent recevoir respectivement des signaux de déclenchement TEV2, TEV3, sont aussi représentés sur cette figure, pour les voies V2 et V3.

D'autres entrées de commande de déclenchement de chacune des voies sont également représentées sur cette figure, pour la voie V1 par exemple.

Ces autres entrées sont désignées pour cette voie, par V1,2, V1,0, V1$\alpha$ ; pour les voies V2 et V3, ces autres entrées sont respectivement désignées par V2,3, V2,1, V2$\alpha$ , et par V3,4, V3,3, V3$\alpha$ .

L'entrée V1,2 est une entrée qui reçoit, un signal de déclenchement provenant de la voie V2 lorsque le nombre prévu de cycles du signal SCV2 fourni par cette voie, est atteint.

L'entrée V1,0 est une entrée qui reçoit un signal de déclenchement provenant de la voie V0, lorsque le nombre prévu de cycles du signal fourni par cette voie, est atteint.

L'entrée V1$\alpha$ est une entrée qui reçoit un signal de déclenchement d'une voie de rang $\alpha$ , lorsque le nombre prévu de cycles du signal fourni par cette voie, est atteint.

Bien entendu, ceci n'est qu'un exemple de déclenchement d'une voie à partir de la fin du signal fourni par une autre voie. En effet, le déclenchement d'une voie par une autre, dépend de l'interconnexion que l'on a choisi d'effectuer entre les différentes voies.

Enfin, le générateur comporte pour chaque voie, des moyens de sélection de mode de fonctionnement de la voie. Ces moyens de sélection ont des sorties reliées à des entrées de sélection des moyens de commande de la voie, pour leur fournir des signaux de sélection de mode de fonctionnement. Les moyens de sélection de mode de fonctionnement sont constitués ici par le processeur 2 par exemple, qui applique sur les entrées 14 des moyens de commande MC1 de la voie V1, des signaux de sélection de mode de fonctionnement de cette voie pour que celle-ci soit déclenchée par un signal TEV1 appliqué sur son entrée 12 de trigger externe, ou par l'un des signaux de commande de déclenchement appropriés, appliqués sur l'une des entrées V1,2, V1,0, V1$\alpha$ , VP1, ou par un signal MAN1 appliqué sur l'entrée de commande manuelle. Les moyens de commande MC1 sont constitués par des circuits logiques programmables qui ne seront pas décrits ici en détail.

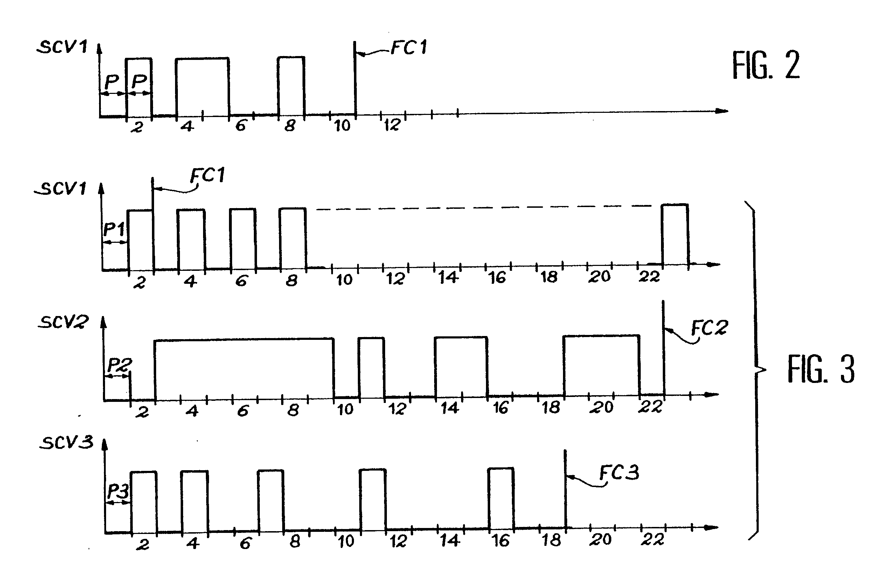

La figure 2 est un diagramme qui représente schématiquement un exemple d'un cycle du signal SCV1, à états logiques programmables, fourni par la sortie 9 de la mémoire d'états M1, de la voie V1. Les rangs des pas p des états logiques des signaux du cycle sont numérotés de 1 à 10. Chaque pas est défini par la fréquence des impulsions FP1 fournies par le générateur d'impulsions G1. Le cycle se termine ici au pas de rang 10, en FC1. Les états logiques correspondant respectivement aux pas du cycle, entre le rang 1 et le rang 10, sont les suivants : 0101100100. Ces informations logiques sont enregistrées dans cet ordre dans la mémoire d'états M1, respectivement à dix adresses successives, repérées du rang 1 au rang 10. Elles sont extraites de la mémoire dans cet ordre, au rythme des impulsions FP1, de fréquence prédéterminée, fournies par le générateur d'impulsions G1 au compteur d'adressage C1 de la mémoire d'états M1, de sorte que le pas p est fixé par cette fréquence prédéterminée. Les informations logiques qui définissent les états logiques du signal du cycle, sont chargées dans la mémoire d'états M1 par le processeur 2, via les bus BP et BI1 qui les transmettent aux entrées d'écriture 5 de la mémoire M1 de la voie V1. Les informations sont accompagnées de données codées concernant notamment le numéro de voie, de sorte que les interfaces (non représentées) dirigent ces informations vers la mémoire M1.

D'autres informations qui sont décrites plus loin, sont chargées dans la mémoire M1, par le processeur 2. Elles sont obtenues, soit directement à partir du clavier 4, soit par un chargement préalable de la mémoire 3 du processeur 2.

Plusieurs informations peuvent être enregistrées en parallèle, à une même adresse de la mémoire M1.

C'est ainsi que dans l'exemple considéré, et aux adresses successives de la mémoire M1, repérées du rang 1 au rang 10, sont enregistrées respectivement, parallèlement aux informations 0101100100 déterminant les états logiques du signal du cycle, des informations 1111111110, dites de fin de cycle. L'information 0, de fin de cycle, enregistrée à l'adresse de rang 10, indique le dernier pas du cycle. Cette information, lorsqu'elle est lue, se traduit par un signal FC1 sur la sortie 16 de la mémoire M1, indiquant la fin du cycle et provoquant la remise à zéro du compteur d'états C1. Le cycle du signal M1 est alors terminé, dans l'exemple considéré.

D'autres informations sont aussi enregistrées dans la mémoire M1, respectivement aux adresses repérées du rang 1 au rang 10. Ces informations concernent notamment le repérage du dernier pas du cycle. Ce repérage est effectué, par exemple, en chargeant respectivement des informations binaires de valeur 1, aux adresses de rang 1 à 8, et à l'adresse de rang 10, de la mémoire M1, et une information binaire de valeur 0 à l'avant dernière adresse, de rang 9. C'est ainsi que parallèlement aux informations 0101100100 d'états du cycle et aux informations 1111111110 de fin de cycle, et en synchronisme avec elles, sont respectivement chargées, aux adresses de rang 1 à 10, des informations 1111111101 de dernier pas du cycle. L'information 0, de dernier pas du cycle, chargée à la neuvième adresse de la mémoire M1, se traduit par un signal DP1 sur la sortie 17 de la mémoire M1, à la lecture de la neuvième adresse, commandée par le compteur C1. Ce signal permet le déclenchement, au pas suivant (pas de rang 10), du compteur d'adresses C2 de nombre de cycles, qui commande l'adressage de la mémoire M2 de nombre de cycles.

Dans l'exemple considéré, le cycle du signal SCV1 à états logiques successifs 0101100100, n'est pas répété. La mémoire M2 de nombre de cycles est donc chargée, à sa première adresse par la valeur binaire 0, de sorte qu'à la réception du signal DP1 de dernier pas du cycle, le compteur d'adresses C2, commande la lecture de la première adresse de la mémoire M2, à laquelle est enregistrée la valeur 0. Ceci se traduit par un signal de commande d'arrêt AV1 sur la sortie 22 de la mémoire M2 ; ce signal commande l'arrêt de la voie V1, après obtention de l'état logique correspondant au dixième pas du cycle du signal SCV1.

Le signal AV1 présente un état logique, tel que l'arrêt du générateur d'impulsions G1 est commandé par un signal MA1 approprié, fourni à la sortie des moyens de commande MC1, lorsque ceux-ci reçoivent le signal AV1.

Lorsque l'on souhaite que le cycle du signal SCV1, soit répété n fois, il suffit de charger respectivement, à n adresses successives de la mémoire de nombre de cycles M2, n informations binaires successives de valeur 1, de sorte qu'à chaque dernier pas du cycle SCV1, l'incrémentation du compteur C2 par le signal DP1 de dernier pas du cycle, provoque un adressage correspondant de la mémoire M2. Pour les adresses de rangs 1 à n de la mémoire M2, le signal AV1 présente alors un état logique qui ne provoque pas l'arrêt du générateur d'impulsions G1.

A l'adresse n + 1 de la mémoire M2, est chargée une information binaire de valeur 0, de sorte que le signal AV1 présente alors un état logique qui commande l'arrêt du générateur d'impulsions G1, par l'intermédiaire des moyens de commande MC1 ; ces moyens fournissent alors un signal MA1 approprié au générateur d'impulsions G1, pour commander son arrêt.

Enfin, pour chaque cycle du signal SCV1, peut être fourni sur la sortie 23 de la mémoire d'états M1, le signal MP1 de marquage de pas. Ce signal résulte d'informations enregistrées respectivement aux adresses successives (de rangs 1 à 10 dans l'exemple considéré) de la mémoire M1, en parallèle avec les informations d'états logiques du cycle du signal SCV1, et avec les informations de dernier pas et de fin de cycle, décrites plus haut. Ces informations de marquage de pas permettent d'obtenir, pour un rang prédéterminé d'un pas du cycle, un changement d'état du signal MP1, à la sortie 23 de la mémoire M1, pour déclencher le démarrage d'une autre voie du générateur.

Cette sortie 23 de la mémoire M1 est reliée par exemple, à l'entrée VP2 de la mémoire d'états de la voie V2, ou à l'entrée VP3 de la mémoire d'états de la voie V3, selon qu'il est souhaité de déclencher l'une ou l'autre de ces voies. Pour déclencher par exemple la voie V2, à partir du sixième pas du cycle du signal SCV1 de la voie V1, on charge par exemple, respectivement aux adresses successives de la mémoire M1, en parallèle avec les informations d'états, de fin de cycle et de dernier pas, les informations 0000010000. L'information de valeur binaire 1, chargée à la sixième adresse de M1, provoque un changement d'état du signal MP1, entraînant le déclenchement de la voie V2 par application de ce signal sur l'entrée VP2 de cette voie. On suppose, bien entendu, que les moyens de commande de cette voie, auxquels est appliqué le signal MP1, sont programmés par les moyens de sélection de mode de fonctionnement (processeur 2), pour que la voie V2 soit déclenchée par un signal reçu sur l'entrée VP2 des moyens de commande de cette voie.

Dans l'exemple décrit, on suppose que le déclenchement de la voie V1, est provoqué par un signal MAN1, dit de commande manuelle, fourni par le clavier 4 du processeur 2. Ce déclenchement peut aussi être commandé par un signal impulsionnel TEV1, dit de trigger externe, appliqué à l'entrée 12 des moyens de commande MC1. Ce déclenchement peut être effectué soit à partir du front montant, soit à partir du front descendant d'une impulsion dite de trigger externe.

Le déclenchement de la voie V1 peut aussi être commandé à partir d'un signal de marquage d'un pas de cycle (MP2 ou MP3 par exemple) appliqué à l'entrée VP1 des moyens de commande MC1. Il peut aussi être provoqué par application d'un signal de commande d'arrêt AV2 provenant de la voie V2, appliqué à l'entrée V1,2 des moyens de commande MC1, ou par un signal de commande d'arrêt AV0 provenant de la voie V0, appliqué à l'entrée V10 de ces moyens de commande. Enfin, il peut être provoqué par un signal de commande d'arrêt AVα provenant d'une voie d'ordre α , appliqué à l'entrée Vα des moyens MC1. Dans chaque cas, bien entendu, les moyens de sélection de mode de fonctionnement (processeur 2) fournissent l'ordre approprié, aux moyens de commande MC1.

La figure 3 représente schématiquement et en exemple, des diagrammes de cycles de signaux logiques SCV1, SCV2, SCV3, fournis respectivement par les sorties des voies V1, V2, V3. Les pas p1, p2, p3, des états logiques respectifs de ces signaux, peuvent être identiques ou différents et dépendent respectivement des fréquences des impulsions, telles que FP1, fournies par les générateurs d'impulsions des différentes voies.

Les signaux de fin de cycles FC1, FC2, FC3, sont respectivement fournis sur les sorties, telles que 16, des différentes voies, au pas de rang 2 pour le cycle SCV1, au pas de rang 22 pour le cycle SCV2, et au pas de rang 18, pour le cycle SCV3.

Le cycle SCV1 sur la voie 1, est un cycle à deux pas, répété à l'infini. Par conséquent, la mémoire M2 de nombre de cycles est chargée à ses adresses successives, par des informations binaires de valeur 1. La mémoire d'états M1 est chargée pour le pas de rang 1, par un état logique bas (valeur binaire 0), que l'on peut qualifier par la lettre B ; cet état logique est chargé à la première adresse de la mémoire M1. Pour le pas de rang 2, la mémoire est chargée par un état logique haut (valeur binaire 0), que l'on peut qualifier par la lettre H ; cet état logique est chargé à la deuxième adresse de la mémoire M1.

Le cycle du signal SCV1 est répété à l'infini. Ce cycle peut être qualifié par la lettre C et sa répétition à l'infini, par la lettre I. Les lettres B, H, C et I, peuvent correspondre respectivement à des touches alphanumériques du clavier 4, tandis que d'autres touches numériques peuvent indiquer le nombre de fois où les niveaux haut et bas pour chaque cycle, ainsi que le cycle, doivent être répétés. Dès lors, les opérations successives de commande à effectuer, grâce au clavier 4, peuvent être résumées par le tableau suivant, pour le cycle du signal SCV1 :

| RANG DE L'OPERATION DE COMMANDE | TOUCHE A APPUYER | NOMBRE DE REPETITIONS DES NIVEAUX ET DU CYCLE |
|---|---|---|
| 1 | B | 1 |
| 2 | H | 1 |
| 3 | C | I |

En adoptant les mêmes conventions, le cycle du signal SCV2, qui n'est pas répété à l'infini, peut être défini par les opérations de commande indiquées dans le tableau suivant :

| RANG DE L'OPERATION DE COMMANDE | TOUCHE A APPUYER | NOMBRE DE REPETITIONS DE NIVEAUX ET DU CYCLE |
|---|---|---|
| 1 | B | 2 |
| 2 | H | 7 |
| 3 | B | 1 |
| 4 | H | 1 |
| 5 | B | 2 |
| 6 | H | 2 |
| 7 | B | 3 |
| 8 | H | 3 |
| 9 | B | 1 |
| 10 | C | 15 |

Le cycle, qualifié par la lettre C est ici généré quinze fois.

Enfin, le cycle SCV3 peut être défini par le tableau suivant :

| RANG DE L'OPERATION DE COMMANDE | TOUCHE A APPUYER | NOMBRE DE REPETITIONS DE NIVEAUX, DE CYCLES ET DE REPRISES DE CYCLES |
|---|---|---|
| 1 | B | 1 |
| 2 | H | 1 |
| 3 | R1 | 1 |
| 4 | B | 1 |
| 5 | R3 | 1 |
| 6 | B | 1 |
| 7 | R5 | 1 |
| 8 | R6 | 1 |
| 9 | C | 1 |

Dans ce tableau, R1 répété une fois, à l'opération de commande de rang 3, indique que l'on répète une fois les opérations de commande déjà effectuées à partir de l'opération de rang 1. R1 répété une fois correspond donc à un niveau logique bas suivi d'un niveau logique haut. De même, R3 répété une fois, à l'opération de commande de rang 5, indique que l'on répète une fois les opérations déjà effectuées à partir de l'opération de commande de rang 3 ; donc R3 répété une fois correspond à R1 suivi d'un niveau bas. Le même raisonnement est applicable aux opérations de commande, de rangs 7 et 8. Le cycle, qualifié par la lettre C est généré une fois.

On voit donc toute la facilité et la souplesse de programmation de chaque cycle.

Les moyens de sélection de mode de fonctionnement (le processeur 2), qui agissent sur les moyens de commande, tels que MC1 de chaque voie, peuvent permettre par exemple, de sélectionner l'un des modes

8

de fonctionnement suivant, pour chaque voie :

Mode 1 : Déclenchement manuel en synchronisation avec l'horloge pilote, une voie est mise en fonctionnement à partir d'une action sur une touche spécifique du clavier (signal MAN1 par exemple).

Mode 2 : Déclenchement manuel et redéclenchement sur "trigger externe" front montant. La voie est déclenchée selon le mode 1 et puis le cycle recommence à chaque front montant d'une impulsion externe reçue après un arrêt.

Mode 3 : Déclenchement manuel et redéclenchement sur "trigger externe" front descendant. Même principe que le mode 2, mais sur le front descendant d'une impulsion externe.

Mode 4 : Déclenchement manuel et redéclenchement sur l'arrêt de la voie V(X + 1). Même principe que le mode 2, le redéclenchement se fait à chaque arrêt de la voie dont le rang est strictement supérieur à la voie courante de rang X.

Mode 5 : Déclenchement manuel et redéclenchement sur l'arrêt. Même principe que le mode 4. Le déclenchement se fait à chaque arrêt de la voie dont le rang est strictement inférieur à la voie courante de rang X.

Mode 6 : Déclenchement manuel et redéclenchement sur l'arrêt V($\alpha$). Même principe que le mode 4. Le redéclenchement se fait sur l'arrêt d'une des voies dont le rang "$\beta$" sera préalablement programmé. La valeur "$\alpha$" est sélectionnée une fois pour toutes.

Mode 7 : Déclenchement sur "trigger externe" front montant. La voie courante est déclenchée à chaque front montant d'une impulsion externe.

Mode 8 : Déclenchement sur "trigger externe" front montant et redéclenchement sur l'arrêt de V(X + 1).

Mode 9 : Déclenchement sur "trigger externe" front montant et redéclenchement sur l'arrêt de V(X-1).

Mode 10 : Déclenchement sur "trigger externe" front montant et redéclenchement sur l'arrêt de V($\alpha$).

Mode 11 : Déclenchement sur "trigger externe" front descendant.

Mode 12 : Déclenchement sur "trigger externe" front descendant et redéclenchement sur l'arrêt de V(X-1).

Mode 13 : Déclenchement sur "trigger externe" front descendant et redéclenchement sur l'arrêt de V(X-1).

Mode 14 : Déclenchement sur "trigger externe" front descendant et redéclenchement sur l'arrêt de V($\alpha$).

Mode 15 : Déclenchement sur le nième pas de V(X-1). La voie courante est déclenchée dès que la voie précédente a atteint dans son cycle, un pas de rang prédéterminé (signal MP1 par exemple).

Mode 16 : Déclenchement sur le nième pas de V(X + 1) et redéclenchement sur l'arrêt de V(X + 1).

Mode 17 : Déclenchement sur le nième pas de V(X + 1) et redéclenchement sur l'arrêt de V(X-1).

Mode 18 : Déclenchement sur le nième pas de V(X + 1) et redéclenchement sur l'arrêt de V($\alpha$).

Mode 19 : Déclenchement sur le nième pas de V(X + 1) et redéclenchement sur "trigger externe" front montant.

Mode 20 : Déclenchement sur le nième pas de V(X + 1) et redéclenchement sur "trigger externe" front descendant.

Mode 21 : Déclenchement sur l'arrêt de V($\alpha$).

Mode 22 : Déclenchement sur l'arrêt de V(X-1).

Mode 23 : Déclenchement sur l'arrêt de V(X + 1).

Ces différents modes de fonctionnement montrent la souplesse de programmation du dispositif. Bien entendu, on suppose que les différentes voies sont interconnectées de manière appropriée.

Pour certaines applications particulières, les sorties des différentes voies peuvent être reliées à certaines entrées d'une porte OU, déterminées par programmation lorsque l'on souhaite mélanger certaines voies sur une sortie unique.

## Revendications

1. Générateur de signaux à états logiques programmables, comportant plusieurs voies (V0, V1, V2, ... , V4, ... ) capables de fournir respectivement sur des sorties, des signaux cycliques (... , SCV1, SCV2, SCV3, ... ) à états logiques successifs programmables, à deux états, caractérisé par le fait que chaque voie comporte :
- un générateur d'impulsions (G1) fournissant sur une sortie, des impulsions (FP1) ayant une fréquence prédéterminée, programmable à partir d'impulsions (HPI ou HEV1) ayant une fréquence de référence et qui sont reçues par une entrée du générateur (G1) d'impulsions ;
- une mémoire (M1) d'états de cycle, programmable, ayant des entrées (5) d'écriture d'informations d'états, pour enregistrer à des adresses successives, pour au moins un cycle, des informations successives d'états binaires, correspondant respectivement aux états logiques successifs du signal (SCV1) fourni par la voie

(V1) pour ce cycle et pour enregistrer à des adresses appropriées, des informations de fin de cycle, de dernier pas du cycle et de marquage de rang d'un pas du cycle ;

- un compteur (C1) d'adresses d'états du cycle, relié par une entrée à la sortie du générateur d'impulsions (G1), et relié par des sorties (7) à des entrées (8) d'adressage de la mémoire d'états (M1), pour commander la lecture, à la fréquence prédéterminée (FP1), des informations binaires successives d'états enregistrées, le signal logique (SCV1) correspondant à ce cycle étant fourni sur une sortie principale (9) de la mémoire d'états (M1), la fréquence prédéterminée (FP1) fixant le pas (P1) ou durée de chaque état logique du cycle, chaque cycle comportant un nombre prédéterminé de pas successifs repérés respectivement par des rangs comptés entre un premier et un dernier pas, ces pas successifs correspondant respectivement aux états logiques successifs du signal (SCV1) et aux adresses successives de la mémoire d'états (M1) ;

- des moyens (MC1) de commande de déclenchement ou d'arrêt de la voie (V1) considérée, ces moyens de commande ayant des entrées de commande (12, 13, V1, ... , VP1) pour recevoir respectivement des signaux de commande de déclenchement ou d'arrêt, et une sortie (15), reliée à une entrée de commande du générateur d'impulsions (G1) pour lui fournir un signal de commande (MA1) de déclenchement ou d'arrêt.

2. Générateur de signaux logiques, selon la revendication 1, caractérisé en ce que l'information dite de fin de cycle est enregistrée dans la mémoire d'états (M1), à une adresse correspondant à celle du dernier pas du cycle, une sortie (17) de cette mémoire d'états, dite de fin de cycle, fournissant à la lecture de cette dernière adresse, un signal (FC1) de commande de remise à zéro du compteur (C1) d'adresses d'états, cette sortie de fin de cycle étant reliée à une entrée de commande (RAZ) du compteur d'états ($C_1$1), pour commander la remise à zéro de ce compteur et le redémarrage du cycle (SCV1) au premier pas de ce cycle.

3. Générateur de signaux logiques selon la revendication 2, caractérisé en ce que l'information dite de dernier pas du cycle est enregistrée dans la mémoire d'états (M1), à une adresse correspondant à celle de l'avant dernier pas du cycle (SCV1), une sortie (17) de dernier pas de la mémoire d'états fournissant, à la lecture de cette information de dernier pas, un signal logique (DP1) correspondant au dernier pas du cycle, la voie (V1) considérée comportant en outre :

- une mémoire (M2) de nombre de cycles, dans laquelle est enregistrée, à une adresse déterminée, une information de comptage d'au moins un nombre prédéterminé de cycles du signal logique (SCV1) fourni par la mémoire d'états (M1) ;

- un compteur d'adresses (C2) de la mémoire (M2) de nombre de cycles, ce compteur (C2) ayant une entrée (19) reliée à la sortie (17) de dernier pas de la mémoire d'états, des sorties (20) de ce compteur (C2) d'adresses de nombre de cycles étant reliées à des entrées (21) d'adressage de la mémoire (M2) de nombre de cycles, cette mémoire de nombre (M2) fournissant sur une sortie de commande (22), reliée à une entrée (13) de commande d'arrêt des moyens de déclenchement (MC1), un signal de commande d'arrêt (AV1) transmis au générateur d'impulsions (G1) par la sortie (15) des moyens de commande, lorsque ladite information de comptage de cycles a été adressée par le compteur (C2) d'adresses de nombre de cycles.

4. Générateur de signaux logiques selon l'une quelconque des revendications 1 à 3, caractérisé en ce que l'information dite de marquage du rang d'au moins un pas du cycle, est enregistrée dans la mémoire d'états (M1), à une adresse correspondant à ce rang, la mémoire d'états (M1) comportant en outre une sortie (9) dite de marquage d'un pas du cycle, reliée à une entrée (VP2) de commande de déclenchement des moyens de commande d'au moins une autre voie (V2) du générateur de signaux logiques, pour lui appliquer un signal de commande de déclenchement du générateur d'impulsions de cette autre voie (V2), pour que la mémoire d'états de cette autre voie fournisse sur sa sortie principale un signal logique (SCV2) correspondant aux informations successives binaires d'états enregistrées dans la mémoire d'états de cette autre voie (V2).

5. Générateur de signaux logiques selon la revendication 4, caractérisé en ce qu'il comporte pour chaque voie, des moyens (2, 3, 4) de sélection de mode de fonctionnement de la voie (V1), ayant des sorties (BP) reliées à des entrées de sélection (14) des moyens de commande (MC1) de la voie, pour fournir à ces entrées, des signaux de sélection de mode de fonctionnement.

6. Générateur de signaux logiques selon la revendication 5, caractérisé en ce que les impulsions (HPI ou HEV1) présentant ladite fréquence de référence, sont fournies par une horloge pilote (H1) du générateur de signaux logiques, ou par une horloge externe à ce générateur.

FIG. 1

FIG. 2

FIG. 3

EP 0 408 439 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 791 384 (MACKEY et al.)<br>* Colonne 2, ligne 26 - colonne 13, ligne 4; figures 1-4 *<br>--- | 1-6 | G 06 F 1/02 |
| X | EP-A-0 137 304 (TAKEDA RIKEN KOGYO K.K.)<br>* Page 3, ligne 31 - page 25, ligne 10; figures 1-9 *<br>--- | 1-6 | |
| A | EP-A-0 129 432 (ONTARIO LTD)<br>--- | | |
| A | WO-A-8 604 702 (ANALOGIC CORP.)<br>----- | | |

DOMAINES TECHNIQUES RECHERCHES (Int. Cl.5)

H 03 K
G 06 F

Le présent rapport a été établi pour toutes les revendications

| Lieu de la recherche | Date d'achèvement de la recherche | Examinateur |
|---|---|---|
| LA HAYE | 05-10-1990 | SEGAERT P.A.O.M.P. |